# EUROPEAN PATENT APPLICATION

(11) **EP 1 971 118 A1**
(43) Date of publication of application: **17.09.2008**
(21) Application number: 08305057.5
(22) Date of filing: 14.03.2008
(51) Int. Cl.: H04M 1/725, H04M 1/247, H04L 29/08

(54) **Method and apparatus for discovering services and updating a mobile device via user behaviour**

(30) Priority: 16.03.2007 US 725032
(71) Applicant: France Telecom S.A., 75505 Paris Cedex (FR)
(72) Inventor: Settapalli, Vinay, SUNNYVALE, CA 94086 (US)

(57) **Abstract**

Apparatus and methods for dynamically updating a mobile device (100,400) in response to a user's behavior. In one exemplary embodiment, a user interface (UI) of the device is capable of being updated based on the user's usage or other behavioral patterns. In one variant, a server (418) and associated mobile portal (420) are utilized to receive (342,344) input from the mobile device (100,400) relating to user behavior, emulate (346) the device on the server (418) (or a proxy device), and discover (348) services (424) applicable to that particular device (100,400). The user interface of the device is then adaptively modified based on the relevant discovered services (424), thereby enhancing user interface efficiency and the user's interaction experience.

## Description

### FIELD OF THE PRESENT SYSTEM:

The present invention is related to the field of wireless communications. More particularly, the present invention is directed in one exemplary aspect to apparatus and methods for discovering, organizing, displaying and updating an interface of a mobile device; e.g., that relates to multiple applications and functions in a mobile communication or other such portable personal electronic device.

### BACKGROUND OF THE PRESENT SYSTEM:

Mobile communications devices such as cellular telephones, smart phones and personal information managers (PIMs) such as the Blackberry device manufactured by RIM typically provide access to any number of types of data and services according to a predetermined access or logical structure. Often, the device operating system (O/S) provides a built-in user interface (UI) to access core functionality such as telephony features, "home screen" and the menu system. On some devices, the O/S also provides one or more separate user interface libraries for native and/or third-party applications. For example, a mobile communication device may include a set of functions for configuring the device and, e.g., organizing contact lists or the like, setting system or network preferences, ring tone, wallpaper, volume, etc. Many of these functions typically include a separate interface (and the associated software to implement the interface). Other functions performed by mobile communication device applications include e-mail, chat and text messaging, audio, and video, each of which may also incorporate their own unique interface and application(s).

The browser embodies yet another user interface, used to access Internet web sites or other network locations. The result is that on many terminals, three or more user interface technologies are being used contemporaneously, and the end users are required to learn to use multiple paradigms for navigation, and to become accustomed to the different designs of each. More specifically, a user navigates through one or more series of menus (resident on the mobile device) to locate a desired service. One instance of navigating includes users searching beginning with a start menu and progressing into sub-menus of the start menu to locate a desired service or application. Another example of navigating includes performing a text search using a traditional Internet search engine (such as Google or Yahoo) to locate a desired service. In yet another example, voice commands are utilized to search and display applications related to a user specified search criteria.

Browser technology further provides a predetermined user interface for users with predetermined files and icons. Users with different set-up profiles would navigate through a smart phone using a similar navigation search criteria irrespective of file type or file content. For example, the smart phone would utilize similar navigation search criteria whether they are trying to access music content, games or video.

This is particularly problematic when these interfaces are used infrequently, thereby causing the user to operate by trial-and error, accesses "help" functions, user's manuals, etc., to execute the desired functions associated with these interfaces.

Moreover, users may desire to upgrade their user interface. In one instance, the user interface upgrade may be dynamically performed to encompass a new device having completely different user interface technology, such as one used by a different device manufacturer or to a different series device from the same manufacturer.

Additionally, the use of multiple interfaces also increases the development complexity from a platform and software development perspective, as a new interface must be developed for each new function on the mobile communication device. Using multiple GUI or other user interfaces to control the different applications and functions of a mobile communication device also increases the total program memory needed by that mobile communication device.

Although the idea of using a markup-language (ML) based browser as the primary user interface on a mobile device is relatively new, several mobile browser vendors are as of the date of this disclosure promoting their browser products as potential solutions to address the need for a unified "look and feel" within a mobile device (and across families of related devices). However, these proprietary solutions fail to completely address the underlying problem, in effect shifting the issue from the cognizance of the mobile device (e.g., smart-phone or PDA) manufacturers to the browser manufacturers.

Thus far, solutions offered by browser manufacturers to enable access to device functionality have primarily involved extending the browser with additional APls (Application Programming Interfaces) to make that browser more accessible to/by the various functions and applications on the device. Since each manufacturer has chosen to implement their own proprietary APls, and since none of these APls have been standardized, services written to one browser would almost certainly not interoperate with another.

A variety of other approaches to implementing user and applications interfaces in mobile communication devices are present in the prior art. For example, United States Patent No. 6,411,989 to Anupam, et al. issued on June 25, 2002 entitled "Apparatus and method for sharing information in simultaneously viewed documents on a communication system" discloses that computer users may utilize different web browsers to access a server system on the World Wide Web (WWW) to create or join a collaborative session. One or more controllers connect the users or collaborators in a session in the server system. This is realized by establishing a so-called "shared Web-top", i.e., a work space, in which different in-document applications can be run and can be interactively, collaboratively shared by a plurality of users. Specifically, this is realized by employing a surrogate that includes a polling loop which periodically checks a shared document structure for changes in prescribed properties, and transmits the detected changes to surrogates of other users, i.e., at least one other collaborator, via a communication channel. To this end, a prospective user of the shared Web-top accesses a system, which transmits mobile code to the user's computer to create a surrogate thereon. The surrogates created for the users of the shared Web-top are connected by at least one controller in the system and individually serve as an interface between the controller and the respective browsers on the users computers. Through use of the polling loop in the surrogate, functionality is realized in which, as one user inputs data into a shared document, for example, into one or more forms in a document, the same data appears in the other user's browser, via the detected changes in prescribed properties of the one or more forms being transmitted over the communication channel to the users' computers and, therein, to their surrogates.

Another example of an interface for a mobile communication device is disclosed in United States Patent No. 6,501,956 to Weeren, et al. issued on December 31, 2002, entitled "Providing blended interface for wireless information services", wherein a user interface between a wireless communication device and an information service provider is disclosed. The interface allows for a blended presentation of information and calling services for implementing an information service to a user of a wireless communication device. The user establishes an initial connection with a data network server to receive a particular service. The data network server sends a set of wireless protocol instructions to the user's mobile device. Based on these instructions, the mobile device will display information to the user which can be used to select a particular service. While preferably presenting a continuous display to the user, the wireless protocol instructions initiate a communication connection between the mobile device and a voice server with speech recognition capabilities. Depending on the service selected and identification of the user by whatever means, including call signals, the voice will run a particular voice application which interacts verbally with the user to perform the desired service allowing the user to control the service without the necessity of entering data or information using the keypad on the mobile device. As seen by the user, there is a continuous connection with the selected service from the initial receipt of the wireless protocol instructions to the final receipt of the requested information. Thus, the user is presented a blended data and voice interface for access to the information service.

United States Patent No. 6,374,305 to Gupta, et al. issued April 16, 2002 entitled "Web applications interface system in a mobile-based client-server system" discloses a mobile-based client-server system architecture that incorporates two specialized software layers--a specialized "proxy" layer that resides on a mobile client station, and a "web agent" layer that resides on a server. A conventional web browser application residing on a mobile client station is configured to point to the proxy layer, which captures HTTP information request messages that are transmitted to, and received from, the web browser. The HTTP request messages are packed by the proxy layer within a selected communication transmission format for upstream transmission over a communication network, such as a wireless network. At the server, the web agent layer recovers the original, (i.e., "raw") HTTP request messages, which are then sent to an appropriate web server for further processing. Responsive HTTP messages transmitted from a respective web server are captured by the web agent layer, which packs the responsive messages within the selected communication transmission format for transmission to the client station. At the client station, the proxy layer recovers the raw HTTP response messages, which are then forwarded to the web browser for processing. The respective proxy and web agent layers preferably employ respective memory caches and have intelligent filtering capabilities, thereby reducing redundant or otherwise unwanted message transmission.

United States Patent Publication No. 20010054087 to Flom, et al. published December 20, 2001 entitled "Portable internet services" discloses a content manufacturing and distribution system for manufacturing, distributing and caching content over wireless or wired Internet to portable devices. The system includes at least one portable device, the portable device capable of presenting users with portable device applications and content that are based on at least one of the user's community and personal preferences, the portable device including a cache for caching content packages on the portable device. A content manufacturing system processes information, data, and application objects from general external sources and community sources, and creates structured, searchable content packages relevant to at least one of a community, geography, and type of portable device. At least one internet server distributes the content packages over the wireless or wired Internet to portable devices based on at least one of community and user preferences. In response to a user submitting a request to the portable device application, the portable device cache is searched and used to fulfill the user request when relevant content packages are available in the portable device cache for fulfilling the request. User requests that require content not available in the portable device cache are routed to the at least one wired or wireless Internet server and content packages fulfilling the request are streamed down to the portable device, fulfilling the user request and updating the portable device cache so that subsequent user requests have access to the updated cache.

United States Patent No. 4,823,283 to Diehm, et al. issued April 18, 1989, entitled "Status Driven Menu System" discloses a system whereby menus on a screen of an instrument permit an operator to adjust and monitor its operating state of the instrument. The system includes the capability that various menus are added and removed from the display in response to changes in the operating state of the instrument; thus, appropriate menus are automatically displayed of the instrument and inappropriate menus are automatically removed from the display. Displayed menu items may be added, removed or modified in response to changes in the operating state of the instrument. As a result of changes in configuration parameters, only those menu items, which are appropriate to a given operating system, are displayed.

United States Patent No. 4,862,498 to Reed issued April 29, 1989, entitled "Method and apparatus for automatically selecting system commands for display" discloses a user-interactive display-based telephone system. An automatic display is provided of a repertoire of telephone command items most likely to be utilized by a user. The display provides one-touch access to such item without requiring either explicit programming of a command repertoire or a search by the user through the history of previous commands. This is accomplished through the use of three heuristics, which consider frequency of command use and previously failed commands. These heuristics may be implemented either separately or together.

United States Patent No. 4,890,257 to Anthias, et al., issued April 18, 1989, entitled "Multiple window display system having indirectly addressable windows arranged in an ordered list" discloses a multiple window display system. A display device and a screen ownership area are provided that points to the identity of the window, which contribute the data for each display area of the display device. An ordered list maintains the active windows in the priority order. The screen ownership area may be regenerated from the ordered list. On each change to the list, terms of list position per device display area, by overwriting, progress the list to increase significantly priority order, the list indicating, in each position, the identity of the window having the respective priority. The list contains the addresses of the windows in storage and the type. The screen ownership area resets to the lowest potential priority list position value and overwrites a current value.

United States Patent No. 4,896,148 to Kurita issued January 23, 1990, entitled "Display apparatus" discloses a display apparatus for displaying character information in various modes. This display apparatus allows the display modes to be changed by changing a character size and a display start address without changing the relative position of a cursor.

United States Patent No. 5,208,910 to Higgins, et al. issued on May 4, 1993, entitled "Menu driven and method system for informing which past selections have caused disabled actions" discloses a method of informing a user of a data processing system. The step of informing includes notification of his previous selections in a current data processing session that have disabled, or otherwise "affected", and selections which would ordinarily be selectable. Control of the data processing system is managed by listing the selections available to the user on series of menus presented on the display means. A CPU instructs the display means to display the menu which corresponds to that particular point in the program. The CPU keeps track of the selections made by user. By referring to a special data file that correlates or compares these past selections to the list of actions displayed in the current menu, the CPU determines which of these actions are "affected". These affected actions are then denoted on the menu in some way, e.g., changing the affected action's color, marking the affected actions with a special symbol, etc. Responsive to the user placing the input focus on an affected action, the CPU presents a list of the past selections, causing the action to be affected on the display means, a user may deselect the past selections causing the action to be affected, and thereby transform the affected action to an unaffected action. The user may perform the desired action with the remaining past selections.

United States Patent No. 5,243,697 to Hoeber, et al. issued September 7, 1993, entitled "Method and apparatus for selecting button functions and retaining selected options on the display" discloses a graphical user interface method wherein a user can retain frequently used menus on the display screen in an intuitive manner. A computer system is coupled to a display for displaying graphic and other data. A pointer control device on the display permits a user to selectively position a pointer on the display and signal selections with a switch. Graphical menu buttons displayed on the screen correspond to menus including further functions. When a menu button is selected by the user, a menu appears in a rectangular box. The rectangular box contains an icon of a pushpin and a plurality of selectable menu choices. If the user places the pointer over the pushpin icon and then releases the pointer control device switch, the icon of the pushpin is modified as if the pushpin has "pinned" the menu to the screen. The temporary menu box converts into a permanent window, which remains on the display regardless of other display operations. The user may dismiss the menu window at any time by placing the pointer over the pushpin icon and momentarily depressing and releasing the switch on the pointer control device.

United States Patent No. 5,420,975 to Blades, et al. issued May 30, 1995, entitled "Method and system for automatic alternation of display of menu options" discloses a method and system including the automatic alteration of a display of multiple user selectable menu options. A counter is associated with each user selectable menu option. The counter associated with a user selectable menu option is incremented in response to each selection by a user of the user selectable menu option. The display of the user selectable menu option is automatically altered in response to a state of the associated counter. The automatic altering may involve any of the following: deleting at least one of a plurality of user selectable menu options, dimming the intensity of the display of the menu option, changing the displayed color of the menu option.

United States Patent 5,535,321 to Massaro, et al., issued July 9, 1996, entitled "Method and apparatus for variable complexity user interface in a data processing system" discloses a method and apparatus for enhanced user interface in a data processing system for use with a multiple function application. Multiple user interfaces are established for selected functions within a multiple function application and stored within a data processing system. Each of the multiple user interfaces preferably has a different level of complexity. User profiles for selected users within the data processing system are utilized to specify desired levels of complexity for particular functions in accordance with a selected user. Thereafter, these user profiles are utilized to automatically select a particular one of the multiple user interfaces within a multiple function application in response to a selection of a particular function by a user. In one depicted embodiment of the present invention a user may selectively alter a user profile or alternatively, the user profile may be automatically altered by the occurrence of a selected event, such as the lapse of a selected period of time or the completion of an education course by a user. In either event a default user interface is also provided for utilization in situations wherein a user profile does not specify a desired level of complexity for a selected function.

Despite the foregoing broad variety of user interface implementations and management techniques, there is a salient need for improved user interface apparatus and methods that (i) are not static in nature (i.e., can be dynamically adjusted on a per-device and/or per-user basis), (ii) apply a priority or logical scheme effective in presenting a user with access to the most relevant services in the most efficient manner; and (iii) are substantially automated, such that significant user intervention is not required in implementing and updating the interface on an ongoing basis.

Such improved apparatus and methods would, however, ideally still support all the traditional functionality (including data and messaging services, local network resources, carrier provided services such as mail, directories, etc., and access to Internet web sites) that users of mobile devices have come to expect, as well be flexible and amenable to expansion or adaptation to future enhancements or services.

Moreover, such improved interface would ideally permit the dynamic customization of interfaces associated with particular users and/or devices, so that each user is presented with a unique and more personally relevant interface for their mobile device.

Furthermore, the improved apparatus and methods would dynamically update or adapt the user interface on a real-time basis and during use, taking into account *inter alia* a user's behavior, thereby increasing the performance of the interface and the user's efficiency in using it.

Such interface would also be selectively controllable at least to some degree in terms of "look and feel" and other user- or network operator-specified properties.

### SUMMARY OF THE PRESENT SYSTEM AND METHOD:

The foregoing needs are satisfied by the present invention, which discloses *inter alia* methods and apparatus for providing a dynamically adaptive user interface in a mobile communication device.

In a first aspect of the invention, a method of operating a mobile communication system is disclosed as in claim 1.

Each time a user provides an input to his/her mobile device, a dynamic customization of the services accessible through the device is presented on the user interface of said device. The customization takes into account past behaviors through the stored inputs as well as the new entry.

In a second aspect of the invention, a mobile communications system according to claim 6 is disclosed.

In a third aspect of the present invention, a mobile device according to claim 11 is disclosed.

### BRIEF DESCRIPTION OF THE DRAWINGS

Fig. 1 is an elevational view of a mobile communication device configured in accordance with one embodiment of the invention.
Fig. 2 is a simplified block diagram of the exemplary mobile communications device of Fig. 1.
Fig. 3 is a block diagram of a generalized wireless network (including mobile communications device(s) of Figs. 1 and 2) configured in accordance with one embodiment of the invention.
Fig. 3a is a block diagram depicting one particular implementation of the wireless network of Fig. 3, showing the use of an exemplary mobile portal and "one click" server.
Fig. 3b is a graphical representation or a mobile network architecture, depicting logical-level interactions between a mobile terminal, an external server (e.g., "one click" server) and Web Services.
Fig. 3c is a flow chart illustrating one exemplary embodiment of the generalized method of operating a mobile device according to the invention.
Fig. 4 is a block diagram illustrating the configuration and operation of a mobile communication architecture according to another embodiment of the invention, wherein a micro-server is employed on the mobile terminal.
Fig. 4a is a block diagram further illustrating the configuration and operation of a mobile communication architecture according to yet another embodiment of the invention.
Fig. 4b is a block diagram further illustrating the configuration and operation of a mobile communication architecture according to still another embodiment of the invention.
Fig. 4c is a block diagram further illustrating the configuration and operation of a mobile communication architecture according to yet a further embodiment of the invention.

### DETAILED DESCRIPTION OF THE INVENTION

Reference is now made to the drawings wherein like numerals refer to like parts throughout.

As used herein, the term "application" refers generally to a unit of executable software that implements a certain functionality or theme. The themes of applications vary broadly across any number of disciplines and functions (such as communications, instant messaging, content management, e-commerce transactions, brokerage transactions, home entertainment, calculator etc.), and one application may have more than one theme. The unit of executable software generally runs in a predetermined environment; for example, the unit could comprise a downloadable Java Xlet™ that runs within the Java™ environment.

As used herein the term "browser" refers to any computer program, application or module which provides network access capability including, without limitation, Internet browsers adapted for accessing one or more websites or URLs over the Internet, as well as any "user agent" including those adapted for visual, aural, or tactile communications.

As used herein, the terms "client device" and "end user device" include, but are not limited to, personal computers (PCs) and minicomputers, whether desktop, laptop, or otherwise, and mobile devices such as handheld computers, PDAs, and smartphones or joint or multi-function devices (such as the Motorola ROKR music and telephony device).

As used herein, the term "clustering" is optionally employed within the invention. Clusters comprise a set of applications or services or live data streams or URLs grouped in accordance with a categorization or association scheme. Subgroups and structure within one or more dimensions of interest (e.g., physical location, cognitive/psychographic factors, time of day, frequency of use) can accordingly be identified, and used as a basis for display and information organization.

As used herein, the term "computer program" or "software" is meant to include any sequence or human or machine cognizable steps which perform a function. Such program may be rendered in virtually any programming language or environment including, for example, C/C++, Fortran, COBOL, PASCAL, assembly language, markup languages (e.g., HTML, SGML, XML, VoXML), and the like, as well as object-oriented environments such as the Common Object Request Broker Architecture (CORBA), Java™ (including J2ME, Java Beans, etc.) and the like.

As used herein, the term "database" refers generally to one or more tangible or virtual data storage locations, which may or may not be physically co-located with each other or other system components.

As used herein, the term "display" means any type of device adapted to display information, including without limitation CRTs, LCDs, TFTs, plasma displays, LEDs, incandescent and fluorescent devices. Display devices may also include less dynamic devices such as, for example, printers, e-ink devices, and the like.

As used herein, the term "integrated circuit (IC)" refers to any type of device having any level of integration (including without limitation ULSI, VLSI, and LSI) and irrespective of process or base materials (including, without limitation Si, SiGe, CMOS and GAs). ICs may include, for example, memory devices (e.g., DRAM, SRAM, DDRAM, EEPROM/Flash, ROM), digital processors, SoC devices, FPGAs, ASICs, ADCs, DACs, transceivers, memory controllers, and other devices, as well as any combinations thereof.

As used herein, the terms "Internet" and "internet" are used interchangeably to refer to inter-networks or internetworking functions including, without limitation, the Internet.

As used herein, the term "memory" includes any type of integrated circuit or other storage device adapted for storing digital data including, without limitation, ROM. PROM, EEPROM, DRAM, SDRAM, DDR/2 SDRAM, EDO/FPMS, RLDRAM, SRAM, "flash" memory (e.g., NAND/NOR), and PSRAM.

As used herein, the terms "microprocessor" and "digital processor" are meant generally to include all types of digital processing devices including, without limitation, digital signal processors (DSPs), reduced instruction set computers (RISC), general-purpose (CISC) processors, microprocessors, gate arrays (e.g., FPGAs), PLDs, reconfigurable compute fabrics (RCFs), array processors, and application-specific integrated circuits (ASICs). Such digital processors may be contained on a single unitary IC die, or distributed across multiple components.

As used herein, the terms "mobile client device" and "MCD" include, but are not limited to, personal digital assistants (PDAs) such as the "Palm®" or RIM "Blackberry" families of devices handheld computers, personal communicators such as the Motorola Accompli or MPx 220 devices, J2ME equipped devices, cellular telephones or "Smartphones" such as the Motorola ROKR, "SIP" phones such as the Motorola Ojo, personal computers (PCs) and minicomputers, whether desktop, laptop, or otherwise, or literally any other device capable of receiving video, audio or data over a network.

As used herein, the terms "network" and "bearer network" refer generally to any type of telecommunications or data network including, without limitation, wireless and Radio Area (RAN) networks, hybrid fiber coax (HFC) networks, satellite networks, telco networks, and data networks (including MANs, WANs, LANs, WLANs, PANs, internets, and intranets). Such networks or portions thereof may utilize any one or more different topologies (e.g., ring, bus, star, loop, etc.), transmission media (e.g., wired/RF cable, RF wireless, millimeter wave, optical, etc.) and/or communications or networking protocols (e.g., SONET, DOCSIS, IEEE Std. 802.3, ATM, X.25, Frame Relay, 3GPP, 3GPP2, WAP, SIP, UDP, FTP, RTP/RTCP, TCP/IP, H.323, etc.).

As used herein, the term "network agent" refers to any network entity (whether software, firmware, and/or hardware based) adapted to perform one or more specific purposes. For example, a network agent may comprise a computer program running in server belonging to a network operator, which is in communication with one or more processes on a client device or other device.

As used herein, the terms "radio area network" or "RAN" refer generally to any wireless network including, without limitation, those complying with the 3GPP, 3GPP2, GSM, IS-95, IS-54/136, IEEE Std. 802.11, Bluetooth, WiMAX, IrdA, or PAN (e.g., IEEE Std. 802.15) standards. Such radio networks may utilize literally any air interface, including without limitation DSSS/CDMA, TDMA, FHSS, OFDM, FDMA, or any combinations or variations thereof including any linear or non-linear transform of RF signals using data to be transmitted.

As used herein, the term "server" refers to any computerized component, system or entity regardless of form which is adapted to provide data, files, applications, content, or other services to one or more other devices or entities on a computer network. For example, a server may comprise a computerized device having a software process running thereon. A server may also comprise a software process, function or entity itself.

Additionally, the terms "selection" and "input" typically refer without limitation to user input using a keypad or other input device or function (such as a speech recognition algorithm), as is well known in the art. Input or selection also may refer, for example, to information received in electronic form from another entity or device.

As used herein, the term "speech recognition" refers to any methodology or technique by which human or other speech can be interpreted and converted to an electronic or data format or signals related thereto. It will be recognized that any number of different forms of spectral analysis such as, without limitation, MFCC (Mel Frequency Cepstral Coefficients) or cochlea modeling, may be used. Phoneme/word recognition, if used, may be based on HMM (hidden Markov modeling), although other processes such as, without limitation, DTW (Dynamic Time Warping) or NNs (Neural Networks) may be used. Myriad speech recognition systems and algorithms are available, all considered within the scope of the invention disclosed herein.

### Overview

In one aspect, the present invention comprises apparatus and methods for intelligently and adaptively providing an interface for multiple applications and/or functions in a mobile communication system; e.g., one including a mobile communication device, a mobile portal and an external server.

The exemplary "one click" service described herein allows the user to, *inter alia*, have direct access - in real time - to a list of numbers, services or applications that he/she often uses, or alternatively services similar to the ones he/she likes and which provided by his/her current mobile portal.

A key feature of the server/portal of the present invention is the ability to emulate each individual mobile device (including for example its application menu, navigation structure, embedded operating system, etc.) to provide uniquely targeted services for each device, and even each user.

Moreover, several applications may be run on the server/portal to emulate different device configurations. All the mobile devices served by the network can therefore have the ability to instantly run on the server/portal for the purpose of discovering services.

In one embodiment, the mobile communication device includes an application module to establish a connection with the mobile portal (e.g., a service provider, a menu invoker configured to establish a user interface template, and a profile collector to collect information on a user's behavior). In addition, a dynamic menu agent may be utilized to update in "real-time" one or more user interface templates in response to historical, anecdotal, or other events such as for example the user's frequency of use of applications, services, URLs, live data streams or the like.

In one variant, the concept of relatedness or "logical proximity" is employed to further enhance the operation of the user interface. For example is a user often uses a first sports-related link on the Internet, whenever he selects a key function associated with another sports site or source, that second site or source will be suggested to the user as being of possible interest (based on the logical relationship of the "sports" topic). In one embodiment of the invention, empirical data of user's past behavior is collected, and statistical relationships (such as for example Bayesian theory) is applied to form the relationships between the patterns and the past behavior. This may be performed by e.g., an algorithm embodied in a computer program running on the one-click server, portal, or even the mobile device (or via a distributed application or program distributed across two or more of these entities).

Additionally, the dynamic updating capability of the user interface via templates can add value to the browser interface by enabling a user to decrease search time required to access applications and services and live data streams and URLs as well as similar applications and services and URLs and live data streams that are frequently visited on a browser, thereby making the mobile device more user-friendly from, *inter alia,* an efficiency standpoint in terms of user time. It also optimizes the network usage for the service provider or carrier, since user access can be more efficient and consume less resources, as the exemplary embodiment utilizes the device memory as a cache, and dynamically indexes the services.

The disclosed interface updating architecture and user interface template system can also advantageously be applied on a per-user and/or per-device basis. For example, the server can maintain "profiles" based on individual users of the same phone, a given phone (irrespective of user), context-sensitive profiles (e.g., "daytime", "evening", when located in a particular city, etc.).

Another salient advantage offered by the invention is the ability to instigate increased use of the mobile communications network, thereby increasing user satisfaction and also service-provider revenue. Specifically, by more efficiently and adaptively tailoring the user's personal preferences to the interface environment, the user is offered significantly greater opportunity to utilize applications, services, and web pages, etc. Simply stated, one aspect of the present invention mitigates the "out of sight, out of mind" disability of prior art information management systems in the mobile environment.

The mobile device of the present invention may also optionally include a server (e.g., an internal server or a micro-server) or other comparable software process within the device itself and capable of, *inter alia,* receiving and processing information from other functions, both internal and external to the mobile communication device.

### Detail Description of Exemplary Embodiments

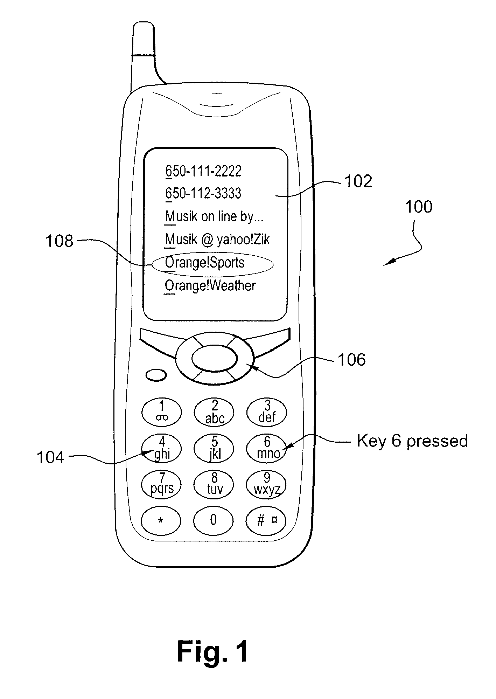

Referring now to Figs. 1 - 8, exemplary embodiments of the apparatus and methods of the present invention are described in detail.

While these exemplary embodiments are described in the context of a mobile communications system architecture connected through an IP Gateway to a Cellular Service Provider (CSP) having digital networking capability and a plurality of mobile communication devices (MCDs), the general principles and advantages of the invention may be extended to other types of networks and architectures, whether wired or wireless, broadband, narrowband, or otherwise, the following descriptions therefore being merely exemplary in nature. For example, these techniques could conceivably be employed in the context of a public switched telephone network (PSTN), WiMAX network, or personal area network (PAN).

Additionally, while described primarily in the context of the well-known Transport Control Protocol (TCP) and Internet Protocol (IP) described in, *inter alia,* RFC 791 and 2460, it will be appreciated that the present invention may utilize other types of protocols (and in fact bearer networks to include other internets and intranets) to implement the described functionality.

It will also be recognized that while described generally in the context of a network providing service to a customer (i.e., cellular telephone user) end user domain, the present invention may be readily adapted to other types of environments including, e.g., commercial/enterprise, and government/military applications. For example, the network might comprise an enterprise intranet communicating between various corporate campuses.

Throughout the application various functions are ascribed to various systems connected in various configurations. It should be understood that the configurations shown are only exemplary embodiments of the invention, and performing the same or similar functions in other configurations or using other methods is consistent with other embodiments of the invention.

Also, it will be recognized that the various systems than make up the invention are typically implemented using software running on semiconductor-based microprocessors or other computer hardware systems, the construction and operation of which is well known in the art. Similarly, the various logical processes and algorithms described here are also typically performed by software running on a microprocessor, although other implementations, including firmware, hardware, and even human performed steps are consistent with the invention.

### Mobile Communication Device (MCD) -

Fig. 1 is an elevational view of a mobile communication device configured in accordance with one embodiment of the invention. The mobile communication device (MCD) 100 includes keypad 104 used for the input of information including for example telephone numbers, contact names, requested applications, requested services, URLs, or the like and a display 102 for viewing information. Additionally, the mobile communication device 100 may include a scroll wheel 106 of the type pervasive in the art for moving through menus and other input and selection activities. Other input devices well known in the art including, e.g., a full keyboard or a mouse replacement such as jog wheels and touch screen, and/or non-tactile inputs such as speech recognition (e.g., CELP-based voice compression), are consistent with the use of embodiments of the invention as well.

During typical operation, a user of the MCD may input numbers, names and other contact or directory information into the MCD 100 via keypad 104. Such contact information may also be downloaded via other connections to MCD 100 (not shown) including wire line and wireless connections (e.g., a Bluetooth/SyncML interface and protocol), or the contact information may be collected as calls are made and received, such as by an indigenous software application adapted for such functionality.

Additionally, a user may interact with other applications such as web browsers, chat applications, e-mail and configuration functions for configuring the mobile communication device, using the keypad 104 and/or the scroll wheel 106. Information resulting from this input is also optionally displayed on the MCD display 102.

As shown in Fig. 1, when a key (e.g., "6") is pressed, a user has direct access (in substantially real time) to a list of numbers, services, applications, etc. that the user often uses, or which bear some other logical relationship to the user or their device. For example, in one embodiment, pressing the "6" key lists *inter alia* all commonly used numbers beginning with the number "6". These may be arranged according to any sub-organizational scheme, such as for example: (i) most frequent first, least frequent last; (ii) number with most instances of "6" first, etc.; (iii) number beginning with "6" that was last called, irrespective of how frequently it was used; and so forth. Myriad different schemes will be readily apparent.

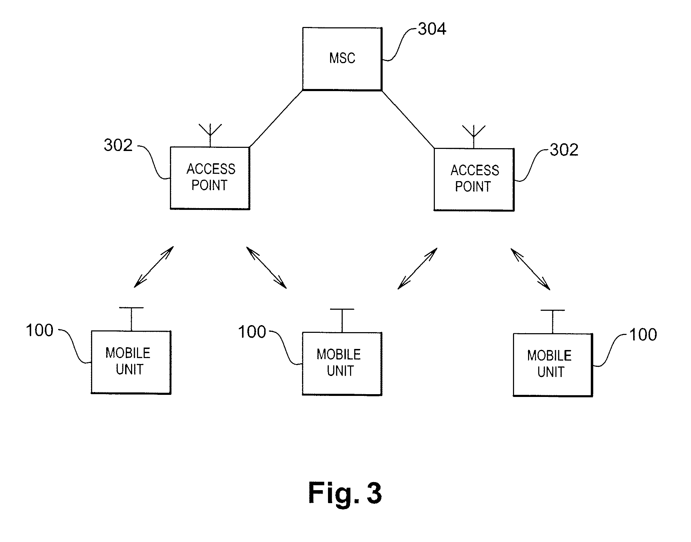

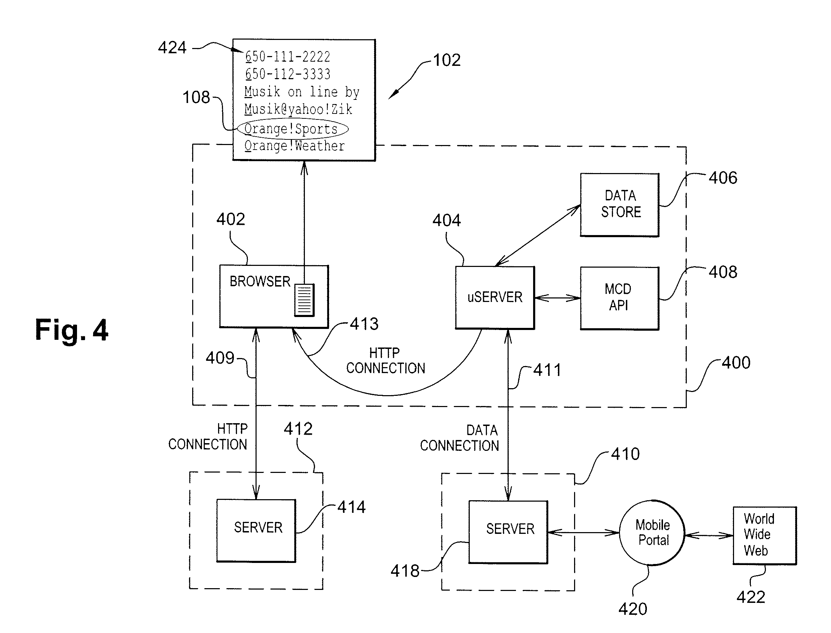

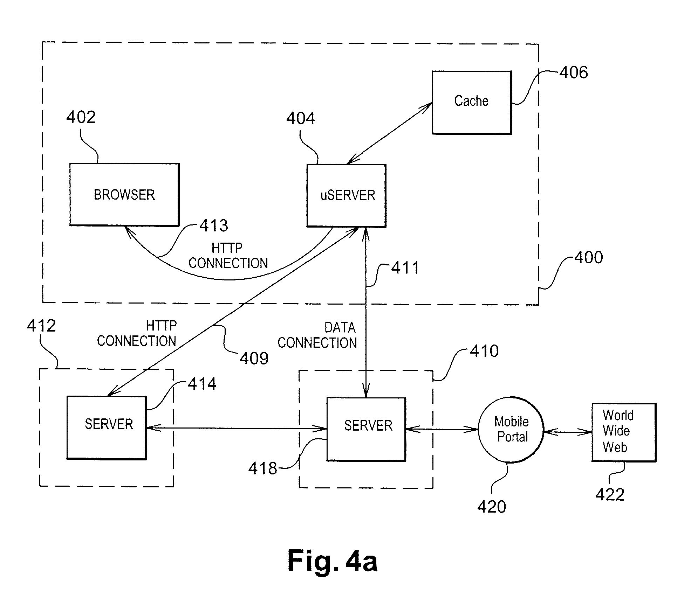

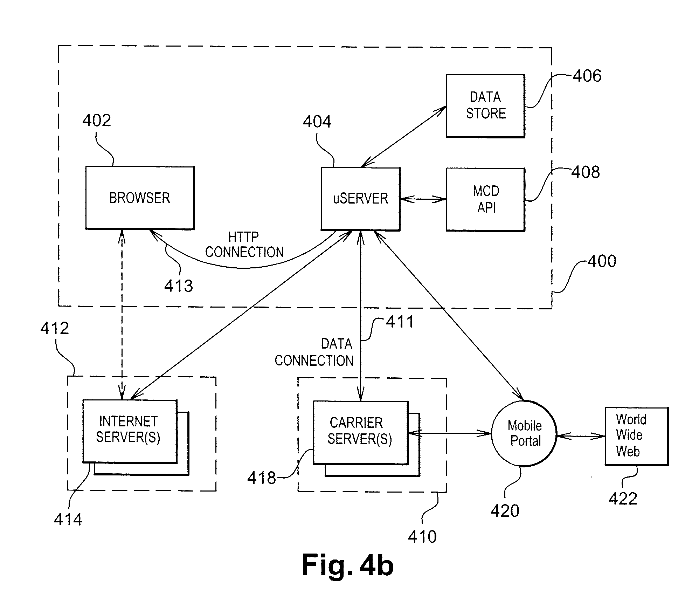

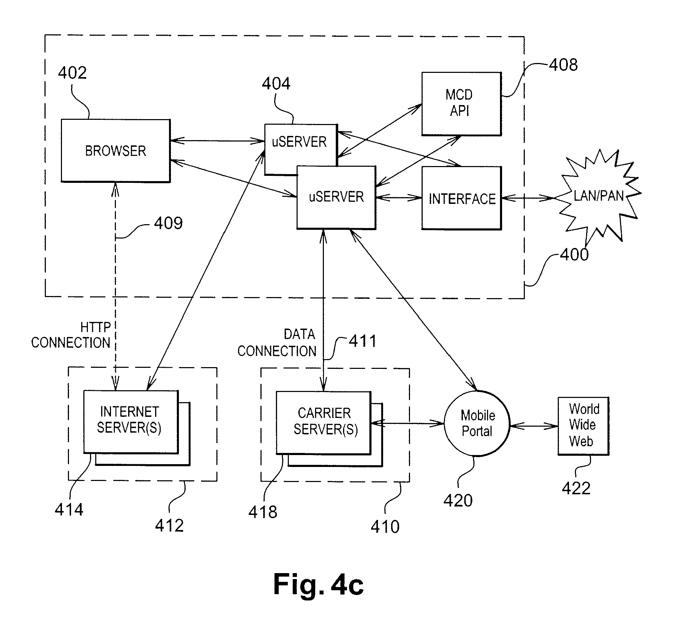

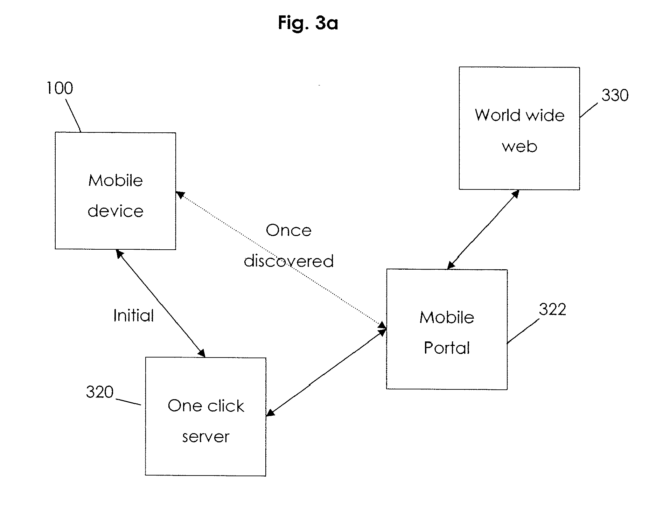

In one variant, the services that are similar to the ones the user likes, and are provided by a mobile portal (shown in Figs. 3a and 4), are displayed. For example, the user may often access Yahoo! Sports. Using principles of the present invention (described below in more detail), a user strikes the key (which in this example represents the number "6" and the letters "M, N and O" on a typical telephone). The user "favorites" or logically proximate entries, in this example, include Orange!Sports, which bears a logical relationship to the "O" associated with the "6" key, and the frequently used Yahoo! Sports. This entry can be individually selected using the scroll wheel 106 on the MCD display 102.

The MCD 100 is, in one embodiment, a cellular telephone or "smart-phone" having at least one wireless air interface or radio area network (RAN) associated therewith, but any other type of mobile or nomadic communication device may be employed in certain embodiments of the invention. For example, a laptop computer with a wireless interface connection such as a WiFi or 3G/UMTS card could be used as an MCD 100.

The MCD 100 preferably interfaces with a base station or other access point via modulated radio frequency electromagnetic signals (RF signals) that are modulated in accordance with one or more communications standards. Examples of useful standards include, *inter alia,* GSM, UMTS, CDMA-2000, W-CDMA, EDGE, IEEE 802.16, 802.15 or 802.11. The use of other standard or non-standard/proprietary wireless interfaces is also consistent with the invention. Multiple such interfaces may also be used, such as where the MCD has a primary (cellular) air interface, as well as a WiFi and/or Bluetooth interface.

Typically, the MCD 100 will include one or more microprocessors, and memory for storing programs that are executed by the microprocessor(s). Other signal processing capability may be used, such as where a DSP is used for processing of visual, audio, or other data, in conjunction with a "host" or other processor such as the well known ARM7 family of RISC devices. Software of the type well known in the art controls the operation of the MCD including processing input, generating display data and menu structures, and generating messages to be transmitted via the wireless link.

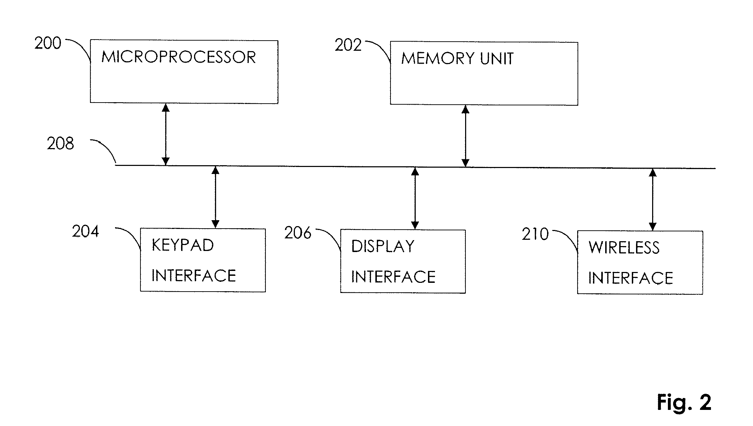

Fig. 2 is a simplified block diagram of mobile communications device 100 configured in accordance with one embodiment of the invention. The microprocessor 200 and memory unit 202 are coupled to a data bus 208. The memory unit 202 can include RAM, ROM and any other data storage device included in the mobile communications device 100, although these storage functions may also be distributed across various components (such as where a microprocessor or DSP has on-chip SRAM, in addiction to discrete DRAM, or on-board cache memory within the microprocessor 200). The memory unit(s) 202 stores, *inter alia,* the software instructions that control the operation of the mobile communication device.

Other functional units are also coupled to the data bus 208 including, e.g., a keypad interface 204, display interface 206 and wireless interface 210. These interfaces provide input-output functions to their respective systems within the mobile communications device 100. For example, data is transmitted to and received from external entities via the wireless interface 210. Input is received from keypad interface 204, and the information to display is transmitted through display interface 206.

In one embodiment, the MCD 100 further includes software comprising a plurality of modules (not shown) including *inter alia*: (i) a dynamic menu agent (a device management utility) to update a wireless interface 210, (ii) a menu invoker, and (iii) a profile collector, which collects information about a user behavior (such as usage habits or routines of the MCD 100) and sends this information to an external server as discussed in greater detail subsequently herein.

It will be understood that other configurations of the MCD 100 are consistent with various other embodiments of the invention, including for the use of multiple data buses and direct connections (e.g., DMA or the like) between various elements of the mobile communication device, including the microprocessor. The device architecture may also be optimized for certain functions, such as power conservation, gaming/video applications, etc. For example, various of the functions described herein may also be configured with "sleep modes" of the type well known in the art in order to conserve precious mobile device power when such functions are not in use.

Additionally, the various elements of Fig. 2 may be combined into single functional units or chip-level aggregations (e.g., SoC devices), or separated into multiple functional units which together provide the same or similar functionality. Multiple entities providing similar functionality may also be used including, e.g., two microprocessors that are focused on performing different tasks, such as one microprocessor for controlling the wireless interface, and another microprocessor for controlling the application functions.

### Network Infrastructure and Methods -

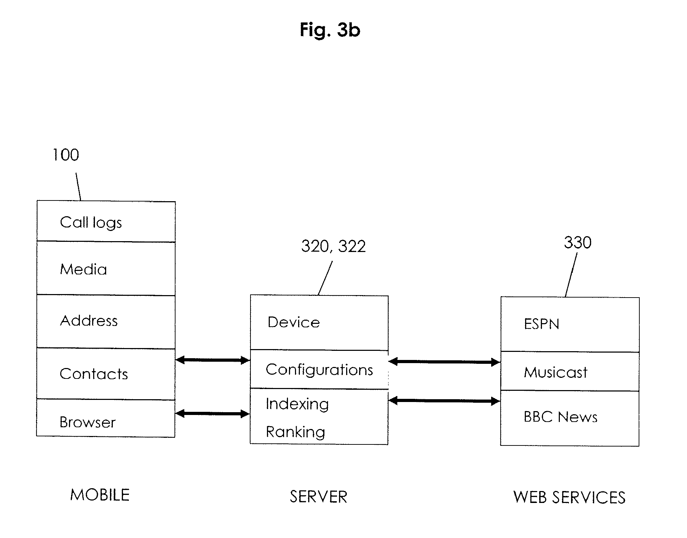

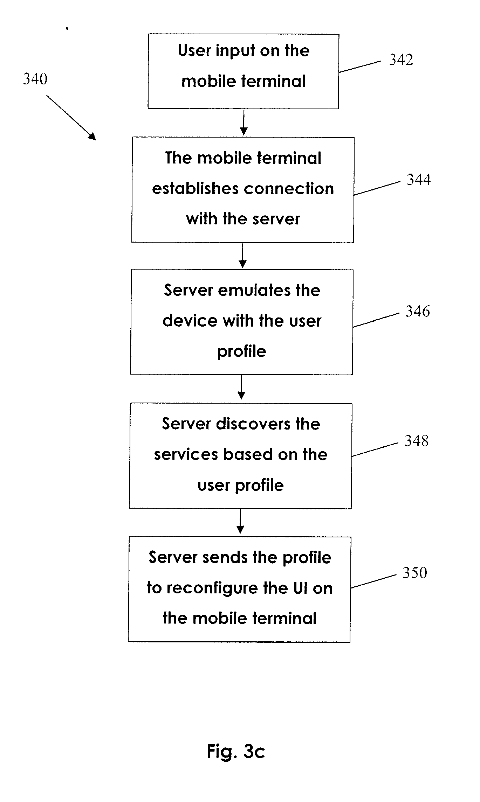

Fig. 3 is a functional block diagram of a wireless network configured in accordance with one embodiment of the invention. The mobile communication devices (labeled as mobile units in the Figure) 100 interface with one or more access points 302 via wireless RF signals. The access points 302 (e.g., mobile portals) are then connected to a mobile switching center (MSC) 304. The MSC 304 is typically co-located with other equipment such as base station controllers (BSCs) and transcoding frames (TCFs), or the base station controllers, etc. may be located elsewhere in the system.

The access points 302 of Fig. 3 may comprise, for example, cellular base stations or wireless access nodes (e.g., WiFi access points (APs)) connected directly to networks such as LANs, WANs, or the Internet, or even other MCDs. In some embodiments, the MCDs 100 may communicate with one or more access points 302 depending on the location and status of the MCD 100. For example, in a handoff situation, a mobile unit 100 may be in communication with multiple access points 302 simultaneously. Alternatively, the "base station" 302 may comprise a Bluetooth "master" which can accommodate up to seven "slave" devices in a typical Bluetooth implementation.

Fig. 3a is a block diagram depicting one particular implementation of the wireless network of Fig. 3, showing the use of an exemplary mobile portal 322 and "one click" server 320. As shown in the Figure, the mobile terminal 100 interfaces with the one-click server 320 via e.g., a direct or indirect interface, which may comprise for example a TCP/IP protocol delivered over a wireless (e.g., cellular) physical layer or medium. Other mechanisms for placing the two devices in data communication will be recognized by those of ordinary skill provided the present disclosure.

As shown in Fig. 3a, the mobile portal 322 is also in data communication (directly or indirectly) with the world wide web, internets (such as the Internet), or other networks or gateways.

The server 320 and portal 322 may be separate entities, physically combined, and/or logically combined. If separate from the mobile portal 322, the "one-click" server 320 is used to extract information; e.g., a user profile associated with the MCD 100 that is registered with the server.

Alternatively, if the "one-click" server is inside or aggregated with the mobile portal 322, information such as services (e.g., applications, live data streams, web pages, and the like) may be limited to those of the parent mobile portal itself.

Once services are discovered (e.g., recognized) by the "one-click" server 320, the MCD 100 may access the mobile portal 322 without the need to go through the "one-click" server. A list of services is displayed on the browser or UI of the MCD 100 upon a "click" by on a keypad 104 (in Fig. 1).

Fig. 3b is a graphical representation of a mobile network architecture, depicting logical-level interactions between a mobile terminal, an external server (e.g., "one click" server) and Web Services. As shown in Fig. 3b, various logical entities or groupings within the mobile device 100 (including e.g., a browser application, contact management application/address book, media player application (e.g., *Real*™, *Windows Media Player*™*,* etc.) interface with the server 320 (or portal 322) functions including mobile device emulation, configuration determination and management, and preference index and ranking. Services (e.g., web services) are detected and accessed by the server 320 as shown also.

Fig. 3c illustrates one exemplary embodiment of the method of operating a mobile terminal according to the present invention. The method 340 generally comprises first providing or receiving a user input via the mobile device (step 342). For example, as shown in Fig. 1, a key (e.g., "6") is depressed corresponding to a particular function.

Next, the mobile terminal establishes a connection with a designated server per step 344. This connection may be established immediately upon receiving the input, or alternatively in a delayed fashion (e.g., "as-available" or opportunistically, depending on other operation parameters such as mobile phone call state, etc.). The various inputs may also be buffered or queued over time, and then bursted or transmitted at periodic intervals (e.g., by the profile collection process, described elsewhere herein).

Per step 346, the contacted server emulates the mobile device based on one or more user profiles. These may be generated at the mobile terminal in advance of the connection, generated at the time of connection, or generated at the server (or a proxy) before or at time of connection by the mobile unit (e.g., pre-stored and accessed when connection takes place).

Next, per step 348, the server uses the profile to discover one or more services, applications, URLs, etc. associated with that terminal (and profile). This may comprise evaluating data gathered from that device (or that user, if the user can be uniquely identified irrespective of device) to determine frequently used services, or identify those which are "logically proximate" or related to those frequently used by one or more criteria. For example, as previously described, pressing a "6" might be programmed to display all numbers beginning with "6" that are used with a certain frequency. Commonly used services beginning with, or comprising, the letters "M", "N" and/or "O" might also be displayed.

It will also be appreciated the present invention contemplates the modification or variation of the displayed services, numbers, etc. by a user; e.g., by specifying that only certain logical relationships, rules, or other constructs be applied. For example, the user might manually enter a rule that states for any key stroke, telephone numbers will be displayed first, followed by website links (URLs), followed by other services.

Alternatively, the user might specify that items are displayed solely in descending order of frequency of use (most frequent at the top, etc.), irrespective of their type or category.

As yet another alternative, a mask or other rule can be applied such that the user display preferences change as a function of: (i) date/time; (ii) geographic location (e.g., GPS coordinates); (iii) membership in a data or telephony network (e.g., WiFi AP, cell site, etc.); (iv) proximity to a point of interest, another "in-network" caller, etc., and so forth.

Finally, per step 350, the server updates the UI profile, and sends it back to the mobile device (and optionally stores it locally for subsequent use as previously described).

In an exemplary embodiment, the server connects to the mobile portal 322 (Fig. 3a) to discover the services that will be relevant for the user/profile. These discovered services are sent back to the mobile device for further display or use on the device 100. Services may be discovered as frequently as each key stroke ("click") or input by the user if desired (or even more frequently, e.g., based on a speculative or predictive mechanism), although lesser frequencies may be used as well. The discovery of services need not necessarily be coupled to the inputs from the user. In an alternative embodiment, the services may be discovered by the one click server once the user profile shows significant changes or simply at regular intervals. Different triggering events can be envisaged by the skilled person in the art to cause the server to update the discovered services.

In an additional embodiment of the present invention, the server stores for a given user the discovered services, and whenever said server receives a profile update for that given user, further services are discovered. Only the newly discovered services may be sent back to the MDC 100 to limit the data transfer between the server and MDCs.

The server 320 discovers services that will be targeted for each particular mobile device 100. The server also advantageously provides the ability for multiple users to connect and discover services. Since the server emulates each individual device configuration, when the user provides an input (e.g., clicks a key-pad), the communication with the server is established, and the server discovers the services for the user, and ultimately these services will be displayed for that specific terminal.

As part of dynamically updating the configuration (e.g., menu structure, graphical user interface, audio interface, etc.) of the mobile terminal 100, one embodiment of the invention uses static and dynamic elements. For example, in the context of a menu structure, there may be one type of menu that will have items that remain the same over time, and another type of menu which will dynamically change based on the variable content that is discovered by the discovery mechanism previously described. One salient disability associated with a purely fixed or static menu structure as used in the prior art is that it limits the user interaction to a pre-determined set of files and applications programmed into that menu structure. Accordingly, the present invention overcomes these disabilities by taking into account the user's experience and historical activities/usage in order to dynamically adapt the user interface on the mobile terminal for optimized user ease and accessibility.

The exemplary emulator terminal (e.g., server 320) has a data structure (e.g., index, table, hash, etc.) of the services and applications on the device and services online for the specific profile of the requesting user. In one variant of the invention, the sequence or combination of inputs (e.g., key presses) received from the mobile device are compared with the indexed or stored services in order to retrieve the applications relevant to the mobile terminal. The relevant application(s) are then displayed on the mobile terminal 100, and the user can choose from the list of available services on each press of the key of the mobile terminal.

By logically describing, ranking and/or indexing the services that are discovered for a given mobile terminal, the exemplary server 320 is able to identify one or more indexed services that the user accesses frequently. This analysis is not limited merely to frequency however; for example, correlations can be identified, such as where each time a user selects a certain service, they also tend to select an associated (or non-associated service). Or, as previously described, logical or topical relationships can be exploited (e.g., *Yahoo! Sports* being related to *Orange!Sports* based on "sports") in assigning ranking or display priority and structure. Myriad other patterns or analyses may be performed consistent with the invention.

By determining the user/mobile terminal "profile" match with the indexed services, the server can then contact the mobile terminal 100 to update the user interface of the terminal with the set of services in the navigation menu of the terminal. For example, in one embodiment, the device refreshes the delta or change of the user interface to dynamically update the menu on the device. Other approaches may be used as well.

In one embodiment, the mobile terminal 100 includes implementations of various software processes or modules (e.g., objects) for providing the foregoing functionality, including a dynamic menu agent, menu invoker, profile collector, and user interface (UI) templates. These are now described in greater detail.

The exemplary dynamic menu agent software invokes the operating system (OS) of the mobile terminal 100 to update the user interface (UI) of the terminal with the one or more preferred templates. This mechanism of updating the user interface on the mobile terminal 100 also takes into the account the information provided by profile collector before determining and invoking a device management utility (or other mechanism) on the mobile terminal 100 to update the UI.

The exemplary menu invoker process is the mechanism that is responsible for interacting with the user of the mobile terminal 100 to establish the preferred template for the user interface. The profile collector process is responsible for notifying the dynamic menu agent of the user preference(s) as the server updates the changes so that any changes will be reflected back into the template(s) of the user interface(s). The profile collector also comprises a data structure that collects all the relevant information about the user's activities and sequences or patterns of input (e.g., click "streams").

Under one embodiment, the exemplary dynamic menu agent, menu invoker and profile collector processed, and the user interface template, do not have to be invoked or kept active (e.g., can be put into a sleep mode or otherwise suspended) if for example the user only performs voice communications, and does not have the data connection on the mobile device 100 active. This advantageously decreases the processing and battery overhead for the mobile terminal, making the device battery last longer. The necessary components can be re-activated upon, e.g., entering a data mode, and entering input (e.g., click of a key).

After the menu invoker process has sent an invocation to the operating system of the device (e.g., a message, primitive or other interprocess communication), the exemplary embodiment of the dynamic menu agent retrieves the current time and location from the mobile terminal, such via a GPS receiver or other such device. Alternatively, cellular site location (or even WiFi or other access point membership) can be used as well. The menu agent determines the user preference(s), and ranks these preference(s) to choose the template of the user interface (UI) to be used for updating the UI on the mobile terminal.

The menu invoker is in one embodiment manually invoked by the user (e.g., via the UI) to explicitly input or select his or her preferences for the menu templates. This manual choice of a template on the mobile terminal will change the user preference ranking on the server 320. In another embodiment, the menu invoker is invoked automatically or upon occurrence of an event, such as a certain prescribed operating event, sequence of key strokes, etc.

Herein lies a salient advantage of the present invention, specifically regarding the ability of users to customize their experience with the MCD 100 through a set of user preferences. Once entered, these preferences can form the basis of multiple different screening or filtering criteria (e.g., phone numbers first, URLs second, etc.), which the user can also switch back and forth between at will. For example, the user might first want to determine the group of all available applications, services, or devices. Then, via menu selection or other input (e.g., speech recognition unit), the user may select all Bluetooth enabled devices within "pairing" range (which can also be determined indigenously via the Bluetooth interface and pairing function of the user's MCD). Next, they may select all applications/services/devices utilized within the last 90 days, and so forth. In this fashion, each user can gain multi-faceted knowledge regarding the various applications/services/devices available in a very short period of time, and can customize their experience easily.

These displays can also be saved and even disposed contiguously, cascaded, or atop one another if desired. Furthermore, different modes or templates selected by a user may be adjusted dynamically based on the user's pre-programming. For instance, a user may program their personal preferences that the MCD (or server) uses as the basis in determining which template to apply. In one example, when the MCD is located within a certain distance of a landmark or street address, the template may be automatically switched to a specified selection. Myriad other applications will be recognized by those of ordinary skill.

It will also be recognized that MCD client software (e.g. the operating system, middleware, or applications associated with the MCD), or even the server 320, can integrate and manage related information from multiple disparate lists of services if desired. For example, intrinsic to a Bluetooth interface are the inquiry and pairing processes, which generate lists of their own (e.g., those within range who have allowed their device to be paired). This list may contain services or applications that are also on another list, such as via their interface with the second server 218 or another MCD in the network. The MCD client software can therefore be programmed to recognize this duality, and (i) eliminate repetitive displays of the same contact, and/or (ii) maintain the duality on separate displays.

In another embodiment of the invention, the MCD 100 itself is configured to store the profile data generated by the profile collector module, and effectuate dynamic adjustment locally (as opposed to having the server 320 retain the user profile data). The local profile data is then sent to the server either at regular intervals, on a key stroke to key stroke basis, or else (as listed before). Hence, the server can emulate the specific MCD, determine which services are prospectively applicable to that particular MCD, and send this information back to the MCD, wherein the MCD itself applies the templates and/or locally stored profile data to update the UI properly by using the device management utilities on the MCD. The MCD may e.g. rank the discovered services using the locally stored profile data.

In this embodiment, the profile data may be stored only locally, or both locally and on the server side. The locally stored services are of a particular interest in case of loss of network signal, as the MCD may use the discovered services (as sent from the server) and the locally stored profile data to present the list of numbers, services, applications, etc. that the user often uses (or which bear some other logical relationship to the user or their device) when said user strikes a key on his MCD.

### Micro-Server Embodiments -

Referring now to Figs. 4-4c, additional exemplary embodiments of the present invention cast in terms of mobile device 100 with micro-server are shown and described in detail. Exemplary methods and apparatus for implementing a micro-server architecture useful with the present invention are described in co-owned and co-pending U.S. Patent Application Serial No. 11/360,242 filed on February 22, 2006 entitled "Interface for Mobile Devices and Methods", incorporated herein by reference in its entirety, although other approaches may be used with equal success. It will be recognized, however, that use of a micro-server architecture such as that described herein is in no way required for practicing the broader principles of the invention, as previously described.

Fig. 4 is a block diagram illustrating the configuration and operation of an exemplary mobile communications architecture with micro-server in accordance with one embodiment of the invention. As will be described subsequently herein, the micro-server architecture provides many capabilities and benefits, including: (i) providing access to device functionality, (ii) caching network data for efficiency, (iii) proxy requests to other networks, (iv) receiving data over asynchronous channels, (v) extending the capabilities of the browser to handle new protocols, (vi) transcoding one protocol to another, (vii) dynamically tailoring contents to a particular device, (viii) managing resource/cost data, (ix) enabling billing interfaces to be presented along with browsing sessions, (x) allowing carriers greater control over the browsing experience on terminals, (xi) acting as a carrier point-of-presence on a mobile device, (xii) updating capabilities of a device over-the-air, and (xiii) enabling the use of commodity browsers as a general-purpose interface for a mobile device.

The illustrated mobile communication device 100 includes a browser 402 (e.g., one adapted for thin mobile client devices, such as a "micro-browser"), and a "micro" HTTP or similar server 404 (micro-server). The browser 402 and server 404 are typically software running on a microprocessor similar to that shown in Fig.2, although other implementations are feasible.

As used herein, the term "micro" is purely a relative term that connotes the exemplary micro-server is adapted to run on a thinner or less capable device (as compared to a PC, BSC, or fixed server blade), and hence requires less processing and storage capability within the MCD. It will therefore be appreciated that the size, capabilities, and form of the server 404 and browser 402 may take on literally any configuration, dependent primarily on the platform on which these processes are used, and their desired levels of functionality.

The micro-server 404 also receives input data via one or more MCD application programming interfaces (APIs) 408, from data stored in a storage device 406 or other repository, and via a data connection 411. The browser 402 exchanges information with other modules via HTTP or other connections 411 and 413. This information is displayed on, for example, display 102 of Fig. 1. Information is also received via the various input devices of the MCD 400 including, for example, a keypad and scroll wheel as described above.

It will be recognized that while shown as part of the MCD 100 of Fig. 4, the aforementioned browser 402, server 404, and/or storage device 406 may also be located on another platform, and merely maintained in logical communication with the relevant entities within the architecture. For example, the data storage device 406 could comprise a database which is disposed on a different platform (e.g., local base station associated with a wireless handset). Similarly, the browser and server processes may be disposed on different physical platforms, yet maintained in data and logical communication with one another. The micro-server 404 can also be made part or integrated with another client application or process, such as where the micro-server comprises a module within an application (or the O/S) of the MCD 100.

A first server 414 may be any HTTP or similar server (including, without limitation, HTTP 1.0, HTTP 1.1, HTTP over SSL, HTTP over TLS, or WAP servers) located on the Internet 412 or other network, and in communication with the micro-server 404 running on the mobile communication device 100 via a circuit- or packet-switched data connection 409 (e.g., modem, packet gateway, etc.). A second server 418 runs within an operator's network 410 that is accessed via a second data connection 411.

In one embodiment, the second server 418 comprises a "one-click" server of the type previously discussed with respect to Figs. 3a-3c. In this embodiment, the MCD 100 accesses a mobile portal 420 through the second server 418. The mobile portal 420, in one embodiment, comprises a carrier server (such as for Orange, *Verizon, Cingular*, *T-Mobile* or the like), although this is merely a business or design choice. The mobile portal 420 accesses the World Wide Web 422 to access services or web-pages that are requested by the MCD 100. The "one-click" server 418 may be part of, or alternatively outside of or external to, the mobile portal 420.

If outside the mobile portal 420, the "one-click" server 418 extracts and utilizes as needed information; e.g., a user profile associated with the MCD 100 that is registered with the second server 418.

Alternatively, if the "one-click" server is inside the mobile portal 420, information such as services (e.g., applications, live data streams, web pages, and the like) may be limited to those of the parent mobile portal 420 itself. Once services are discovered (e.g., recognized) by the "one-click" server 418, the MCD 100 may access the mobile portal 420 without the need to go through the "one-click" server 420. A list of services 424 is displayed on the browser 402 upon a "click" by on a keypad 104 (in Fig. 1).

In another embodiment (Fig. 4b), the browser 402 directly accesses the "one-click" server 418. After a discovery process (e.g., once the "one-click" server has discovered the requested service(s)), the browser 402 is capable of directly accessing the mobile portal 420 to receive information associated with applications, services, URLs, live data streams, or the like). It will be appreciated that while HTTP-over TCP/IP protocol-based connections 409, 411 are illustrated, other protocols may be used, as well as other transport modalities. These data connections can also be heterogeneous in nature, such as where an HTTP-over TCP/IP based approach is used for the first connection 409, and a non-TCP/lP approach (e.g., SMS or the like) is used for the second connection 411.

Furthermore, the system may comprise any combination of servers (as shown in Fig. 4c), including the case where: (i) only one first or second server 414, 418 is used, (ii) where multiple first servers 414 and no second servers 418 (and vice-versa) are used; or (iii) multiple servers of each type are used. Additionally, as described in greater detail subsequently herein, the second server 418 (e.g., "one-click" server) can be operated or managed by the network operator, or by a third party, and may be in data communication over any network, not just the operator's private network. The second data connection 411 could also comprise a more generic data source. Myriad other combinations and permutations will be recognized by those of ordinary skill provided the present disclosure.

During operation of the MCD 100, the browser 402 receives data to process/display from one or more of the HTTP connections 413, 409. The HTTP data from the HTTP connection 409 to the server 414 will typically be obtained from a web site or other URL being viewed by the MCD user, and may comprise either static data or dynamically generated data (e.g., that based on some input data or string, such as a query for a search engine). The HTTP data from the micro-server 404 may be from applications running on the MCD 100, and configured in compliance with an MCD API 408. Such applications can include, e.g., configuration functions, e-mail applications, and music or video related applications. It will also be noted that the methods and apparatus set forth in co-owned and co-pending U.S. Patent Application Serial No. 11/317,473 filed December 22, 2005, and entitled "Methods And Apparatus For Organizing And Presenting Contact Information In A Mobile Communication System" and incorporated herein by reference in its entirety, may be used in conjunction with the present invention. Specifically, the enhanced "contact" management functions described therein can be used as the basis of an application or service running on the MCD and accessible by the micro-server 404. Data associated with this functionality can also be resident within the data store 406 of the MCD, and hence accessible via the micro-server 404, or as "static" information.

The micro-server 404 may also receive information from other servers such as the operator network server 416, which provides data by way of associated data connection 409. Additionally, the micro-server 404 may retrieve data from (or write to) data storage 406.

The micro-server 404 receives this information from the various sources, and places it in XML, HTML, SGML, or another suitable format or protocol as required before delivering it to the browser 402 for viewing. Similarly, micro-server 404 may receive data from the browser 402 that is then processed and forwarded to the appropriate system using, e.g., the API to indigenous applications on the MCD, and/or the data connection 411. In this fashion, the micro-server acts as a proxy for the browser, resident MCD applications and the second server 416.

By providing a micro-server architecture that includes an API interface within the mobile communication device itself, the illustrated embodiment of the invention further allows for a more uniform interface to be provided to the user. In particular, the micro-server 404 allows the other applications on the MCD to transmit data to the user via the micro- browser 402 also included in the mobile communication device. Thus, other applications on the mobile communication device only have to provide the micro-server with the information that must be displayed, and the formatting; display and input reception functions may be handled by the micro-server and the micro-browser. This can be accomplished using any of a variety of means commonly employed by "application servers" such as the use of templates, server-side inclusions, style sheets, PHP, JSP, AJAX or other such mechanisms well known to those of ordinary skill.

More generally, the foregoing may be accomplished by any means of abstracting presentation/display from content. In certain embodiments, the applications may need to be configured to interact with the micro-server 404 before they can be used in this manner. However, regardless of the approach used, it will be appreciated that a salient benefit provided by the approach of the present invention is that the micro-server/micro-browser combination effectively handles the actual display, formatting, and user interface functions, such that the application itself does not need to provide any UI "code" of its own (rather, only an API to exchange content data with the micro-server).

Additionally, by viewing information received from external servers as well as the internal micro-server 404 using a single micro-browser interface, the user is provided more uniform experience when using the MCD. This approach advantageously reduces number of interfaces, menu structures, etc. that a user must learn and remember, and greatly simplifies the use of the mobile communication device, especially when the various functions are not frequently used. As is well known, the human memory fades significantly with time, and hence complicated access via multiple different interfaces can be easily forgotten if not frequently used. This leads to significant user frustration and dissatisfaction with the MCD and even the carrier's mobile service plan (i.e., by sponsoring or delivering subscriber devices that are unwieldy to operate).

Also, the micro-browser 402 of the illustrated embodiment is reused for multiple functions, which reduces the number of programs that must be incorporated into the mobile communication device, as well as reducing the size and complexity of each of the programs by eliminating the need for many different sets of UI code. While somewhat intangible and hard to predict, it is a well-identified phenomenon in computer systems that increasing numbers of applications and other programs running on a given system will tend to generate an increasing number of incompatibilities, often leading to the device "crashing", locking up, or other types of undesirable behavior. This phenomenon stems largely from the fact that even when standardization is employed, different software vendors cannot test their applications against the plethora or other applications or programs that might be running on the same platform. Some applications simply do not operate well with other applications on the same platform. Hence, the present invention advantageously obviates the need for many of these other applications, thereby reducing system complexity (from a software perspective) and increasing robustness and reliability.

Furthermore, a use of a common interface, as in the illustrated embodiment, will reduce the programming necessary to create new applications for the mobile communication device 100. In particular, the programmer will not have to develop a complicated interface for the application before it can be added to the mobile communication device. The programmer only has to provide "hooks" in the program such that it operates with the mobile communication device application programming interface (API), the micro-server 404 and micro-browser 402, which handle the "standardized" interface function automatically. This saves development resources, as well as ostensibly saving the number of instructions that must be performed, thereby contributing to operational efficiency and potentially even reduced power consumption, a significant issue for mobile devices due to their finite battery power supply.

Like most HTTP or other such servers, the exemplary micro-server 404 may provide either static or dynamically generated data in response to a request by the user. In one embodiment, the user interacts directly with the browser 402 using the MCD 400 user interface (U/I). The browser 402 in turn exchanges data over the HTTP connection 409 with a server 414 on the Internet 412 or other external network, modifying the MCD display accordingly. The server 414 may provide static data in response to requests from the browser, or alternatively may dynamically generate data in response to each request from the browser by processing input data and possibly querying databases or otherwise gathering data. For example, a user may request a URL which requires only the return of static data from the server 414. Or, the user may enter a search string or other input data into the browser, at which point this information is forwarded to the server to initiate a database query (e.g., "Google" search or the like).

In the micro-server configuration, the same browser 402 is also used to exchange data using the HTTP connection 413 with the micro-server 404, as shown in Fig. 4. Much like the Internet server 414, the micro-server 404 provides either static or dynamically generated data in response to a request issued by the user/browser. Static data may come directly from the data store 406 on the device (e.g., cached data which is commonly used by the MCD), while dynamically generated data can use the data connection 409 access other servers 416 on the network, access device functionality via the terminal API 408, and also access the data store 406 to store or retrieve data.

As will be appreciated, the caching of commonly used data in the data store 406 allows for an improved browsing experience for the MCD user, since the data can be rapidly accessed and transmitted to the browser 402 via the server 404.

Data can also be received by the micro-server 404 over the data connection 409 asynchronously, stored in the data store 406, and later transmitted to the browser over HTTP connection 413. In this manner, the micro-server 404 can act as a caching gateway between the browser and data accessed via other protocols. This is useful in a variety of situations, such as when the browser is otherwise occupied with other tasks, or protocol translation between two environments (e.g., the distant server and the browser) is required. The micro-server 404 can also act as a proxy server, fetching documents either from a cache in the data store 406 or receiving them via the data connection 409 and optionally adding them to the cache in the data store 406.

Various embodiments of the invention implement the micro-server 404 in different forms, ranging from e.g., a very simple (HTTP) server process, to a full-fledged application server (e.g. web application server). Exemplary commercial examples of web application servers include IBM WebSphere, BEA WebLogic, ATG Dynamo Application Server, and Jboss, although it will be recognized that other types and configurations or servers may be used with equal success.

In addition to basic XHTML documents, the micro-server 404 can preferably return any media type supported by HTTP or other such protocol used as the basis for the system, including but not limited to audio and video streams (e.g., MPEG-2, H.264, AVC, Real Networks or other encodings), CSS style sheets, ECMAScript programs, and raw XML data. Advanced client-server web technologies such as remote eventing and DOM load and save can be utilized to enable more fluid and dynamic user interfaces within the browser, while still respecting the client-server abstraction layer. Advantageously, applications running inside the micro-server 404 environment have access to any functionality exposed by the terminal API, as well as to any resource on the network.

Furthermore, it will be recognized that since the illustrated embodiment of micro-server requires no user interface of its own, it can be written in a less platform-dependent manner than one having a built-in UI. However, the present invention also contemplates a user-interface enabled variant, which is substantially platform dependent. Hence, the architecture is flexible in that it can be configured to be completely platform agnostic, or alternatively have varying levels of platform dependence based on the needs of the designer and software developer.

The micro-server based architecture of the invention also allows for enhanced efficiency in terms of data caching. For example, if a user was accessing a mail account on the Internet using the browser 402, the browser itself (e.g., in a prior art configuration) would not necessarily know that it would be more efficient to cache the attachments locally on the MCD for later use. However, using the micro-server 404, management of the selective caching of attachments, etc. (such as for example pre-caching attachments as messages arrive) can be provided, thereby increasing efficiency and user experience. The micro-server of the exemplary embodiment is in a better position than the browser to perform these functions because of its access to extended context information, such as may be provided by its access to the device API or to network information from an operator data source.

Moreover, the micro-server architecture of the invention allows for extended functionality to be obtained from the browser 402. In many cases, this extended functionality can be provided simply by extending the micro-server 404 with additional functionality, while keeping the same "commodity" browser. An example of one such technology that could be upgraded in the micro-server 404 instead of the browser 402 is the Dynamic Properties Framework (DPF) work that is currently progressing in the W3C. Rather than waiting for all browsers to support this Framework, a carrier or service provider utilizing micro-servers 404 in their subscriber devices (e.g., MCDs) could upgrade the micro-server to support DPF (such as via downloads over the wireless network), and provide access to dynamically changing device properties to any of the existing commodity browsers (which may also differ from MCD to MCD).

The exemplary architecture of Fig. 4 also allows multiple micro-servers or comparable processes to be present on a single mobile device. For example, multiple servers (see, e.g., Fig. 4c discussed subsequently herein) can be utilized in order to divide extended phone, data or other functionality between different parties, such as service providers and device manufacturers. A device manufacturer could install a micro-server 404 on a mobile device 100 to provide a browser-based telephone/VolP service, mail service, address book service, phone settings service, etc. On the same device, a service provider could install a separate micro-server 404 to provide access to operator-supplied data services such as news, weather, or sports scores, which are delivered asynchronously to the micro-server by the service provider network. Given the platform independence of this architecture, these multiple servers can be largely generic and also can be installed ad hoc; e.g., the subscriber could download one or more of the micro-servers onto their device over a data network (e.g., from a web server) and install the server directly into the existing MCD software environment.

From a software perspective, the exemplary micro-server architecture of Fig. 4 also leverages the benefits of web standards, such as separation of design from contents, which can make authoring new interfaces much easier. Using web technologies (such as markup-based content authoring languages and style sheets for determining "look and feel") allows the software author to create one markup model, and use style sheets to subsequently manage the look and feel.

The micro-server approach allows a standards-based browser to be used, without modification, to access phone or other such functionality on the device, and also to access data that arrives at the device asynchronously and over many different data protocols. The major benefit is that any standards-based browser can be used with the system without requiring special proprietary extensions being added to support access to the various functions of the host platform (e.g., MCD 100).

Figs. 4a-4c illustrate various alternate embodiments of the architecture of the present invention.

In Fig. 4a, a "proxy" configuration is illustrated, wherein the micro-server 404 acts as a proxy between the micro-browser 402 and external processes (such as the servers 414, 416). A detailed description of the operating principles of an exemplary proxy architecture such as that of Fig. 4a is described subsequently herein with respect to Fig. 7.

Fig. 4b is a hybridized architecture with both proxy and non-proxy (i.e., direct browser-to-web server) functionality.

Fig. 4c illustrates an architecture wherein the MCD 100 comprises two or more micro-servers, which also may act as proxies as in the embodiment Fig. 4a. A separate interface to a LAN or PAN is also in communication with the micro-server(s) 404.

It will be appreciated that the embodiments of Figs. 4-4c are merely exemplary; features and attributes of each can be combined with others, or yet other configurations recognized by those of ordinary skill may be used with the architecture of the present invention.

### Meta-Agent Embodiments -

In yet another embodiment of the invention, a "meta-agent" such as that detailed in co-owned and co-pending U.S. Patent Application Serial No. 11/026,421 filed January 31, 2004 entitled "Method for interacting with automated information agents using conversational queries", previously incorporated herein by reference in its entirety, may be used to direct interaction with automated agents on e.g., text messaging systems. For example, the MCD's client application described herein can represent (and graphically render) the meta-agent for various types of interactions. Conversely, the meta-agent can use information passed by the MCD 100 automatically.

In the exemplary embodiments of the present invention, users can address the meta-agent directly if the meta-agent is represented in the MCD mobile display client. The meta-agent (and associated functionality) can advantageously be associated with users according to context (of the applications, services, and URLs), even though it is not a physically-located human entity. This approach enables the associative and dynamic adaptation features of the present invention to be used in an automated manner to streamline interaction with the meta-agent (typically a computerized process running on the mobile device, or a server).

For example, if the meta-agent "knows" (through meta-information or meta-data) that one of its client automated agent processes ("agents") can answer queries about Italian restaurants in the North End of Boston, the meta-agent (or its proxy agent) should appear as a "service" in a "North End contacts" cluster as provided by the MCD client application, along with any services and applications and URLs associated with that area. The MCD client can pass the relevant location (here, North End of Boston) to the meta-agent with any user request.

Note that the presence of the meta-agent or proxy in a given cluster may be driven by any type of proximity, whether geographic, cognitive or otherwise. For example, in a cognitive application, the meta-agents for services and applications that the user utilizes frequently could form the basis of a cluster, or alternatively each of these meta-agents could be separately associated with other services or groupings (e.g., via some other logical relationship, such as geography as previously described).

Great utility for the present invention can be found in the context of mobile devices such as PDAs, smart-phones, etc., since many users will want to utilize Internet or other network "browsing" functions, high-speed data access, etc. while operating in a mobile state. Accordingly, network operators implementing such functionality may in one business model exact a premium for such services (or offer it as an incentive, on a trial basis, etc.). For example, "basic" plans might contain a normal static menu-driven user/interface on a lower end MCD, whereas the premium plan might include the aforementioned dynamic user interface and service discovery on a higher-end MCD. Moreover, users might be given varying levels of ability to configure or adapt their interface (e.g., via more choices for templates, etc.), change the frequency or rapidity with which it updates, etc.

Moreover, the optional installation of micro-server 404 and associated architecture elements by carriers or other service providers offers these providers an active point-of-presence on the subscriber's mobile device. This versatile and dynamic environment can be selectively controlled to varying degrees by the carrier, and can be used to improve the user's experience with the device (and the carrier's services) including controlling the operation of the adaptive, dynamic update aspects of the present invention.

It will be recognized that while certain aspects of the invention are described in terms of a specific sequence of steps of a method, these descriptions are only illustrative of the broader methods of the invention, and may be modified as required by the particular application. Certain steps may be rendered unnecessary or optional under certain circumstances. Additionally, certain steps or functionality may be added to the disclosed embodiments, or the order of performance of two or more steps permuted. All such variations are considered to be encompassed within the invention disclosed and claimed herein.

While the above detailed description has shown, described, and pointed out novel features of the invention as applied to various embodiments, it will be understood that various omissions, substitutions, and changes in the form and details of the device or process illustrated may be made by those skilled in the art without departing from the invention. The foregoing description is of the best mode presently contemplated of carrying out the invention. This description is in no way meant to be limiting, but rather should be taken as illustrative of the general principles of the invention. The scope of the invention should be determined with reference to the claims.

## Claims

1. A method of operating a mobile communications system, comprising:
receiving (342) a plurality of inputs from a mobile device (100);
storing (346) said inputs in a data structure associated with said device; and
for at least one new subsequent input, accessing (348) said stored inputs to identify at least one service to be displayed on a user interface (102) of said device;
wherein said identifying at least one service comprises identifying based on a logical relationship between said new subsequent input and an attribute of said at least one service.

2. The method of Claim 1, wherein said plurality of inputs comprise selections of numbers, services, and/or applications made by a user over time.

3. The method according to one of the previous claims, wherein said at least one new subsequent input comprises at least one key stroke on a keypad of said device, and wherein said identifying based on a logical relationship comprises relating a letter or number associated with said key stroke with one of the letters of an identifier for said at least one service.

4. The method according to one of the preceding claims, wherein said act of storing comprises determining at least one additional service useful with said mobile device.

5. The method of Claim 4, wherein said determining comprises accessing one or more network entities via a mobile communications portal (322).

6. A mobile communications system, comprising:
a mobile device (100) adapted to receive a plurality of inputs from a user;
network apparatus (320) in data communication with said mobile device and adapted to store said inputs in a data structure associated with said device; and
a computer program operative to run on said network apparatus and, for at least one new subsequent input from said user, access said stored inputs to identify at least one service to be displayed on a user interface (102) of said device;
wherein said identification of at least one service comprises an identification based on a logical relationship between said new subsequent input and an attribute of said at least one service.

7. The system of Claim 6, wherein said plurality of inputs comprise selections of numbers, services, and/or applications made by a user over time.

8. The system of one of the previous claims 6 and 7, wherein said at least one new subsequent input comprises at least one key stroke on a keypad of said device, and wherein said identification based on a logical relationship comprises relating a letter or number associated with said key stroke with one of the letters of an identifier for said at least one service.

9. The system of one of the previous claims 6 to 8, wherein said storage of said inputs comprises the determination of at least one additional service useful with said mobile device.

10. The system of Claim 9, wherein said determination comprises accessing one or more network entities via a mobile communications portal, said portal in communication with said network apparatus.

11. A mobile communications device (100), comprising:
first apparatus adapted to receive a plurality of inputs from a user;
second apparatus in data communication with a network entity (320, 322) and adapted to store said inputs in a data structure associated with said mobile device; and
a computer program operative to run on said mobile device and, for at least one new subsequent input from said user, directly or indirectly utilize said stored inputs to identify at least one service to be displayed on a user interface (102) of said device;
wherein said identification of at least one service comprises an identification based on a logical relationship between said new subsequent input and an attribute of said at least one service.

12. The device of Claim 11, wherein said plurality of inputs comprise selections of numbers, services, and/or applications made by a user over time.

13. The device of Claim 12, wherein said at least one new subsequent input comprises at least one key stroke on a keypad of said device, and wherein said identification based on a logical relationship comprises relating a letter or number associated with said key stroke with one of the letters of an identifier for said at least one service.

14. The device of one of the previous claims, wherein said storage of said inputs comprises determination of at least one additional service useful with said mobile device.

15. The device of Claim 14, wherein said determination comprises accessing one or more network entities via a mobile communications portal, said portal in communication with said network entity.

16. A computer readable carrier including computer program instructions that cause a computer to implement a method according to claims 1 to 5.
